(19) Europäisches Patentamt
European Patent Office
Office européen des brevets

(11) Publication number: **0 064 348**
**A2**

(12) # EUROPEAN PATENT APPLICATION

(21) Application number: 82301974.0

(22) Date of filing: 16.04.82

(51) Int. Cl.[3]: C 08 J 9/28
B 32 B 5/18, E 04 B 1/76

(30) Priority: 06.05.81 US 261063

(43) Date of publication of application:
10.11.82 Bulletin 82/45

(84) Designated Contracting States:
BE CH DE FR GB IT LI NL SE

(71) Applicant: Exxon Research and Engineering Company
P.O.Box 390 180 Park Avenue
Florham Park New Jersey 07932(US)

(72) Inventor: Patton, Tad Lemarre
5010 Glen Haven Drive
Baytown Texas(US)

(74) Representative: Northover, Robert Frank et al,
ESSO CHEMICAL LIMITED ESSO RESEARCH CENTRE
P.O. Box 1
Abingdon Oxfordshire, OX13 6BB(GB)

(54) **Method of insulating.**

(57) A method of insulating an area comprising positioning a structure, such as a structure consisting of non-porous micro-cellular film of from 0.0127 to 0.508 mm thickness of a polymer of the structure:

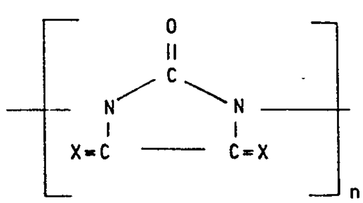

wherein X is O or NH, provided at least one X is O), such as poly(parabanic acids) with or without a contiguous second material such as glass, wood, metal, paper, asbestos or a polymeric material adjacent to said area.

**EP 0 064 348 A2**

# METHOD OF INSULATING

The present invention relates to a method of insulating an area to reduce both thermal conductivity and the transfer of radiant heat. The present invention in particular relates to specific polymeric materials which in conjunction with other materials as in the form of laminates provide a structure to insulate an area.

The art is replete with numerous polymeric materials used either alone or in combination with other materials to form thermal screens, e.g., U.S. Pat. No. 3,730,891 (heat insulating PVC film is prepared by treating PVC resin or copolymer with anhydrous silica, plasticizer and stabilizer) U.S. Pat. No. 4,076,889 (heat insulating material produced by applying a metal to one surface of a film of polyfluoroolefin or fluoroolefin copolymer). Of course, foamed polyurethane is among the best known and widely used insulating materials. Various other polymeric materials, both foamed and unfoamed, transluscent and opaque, alone and laminated have been similarly employed.

Specific polymers employed herein are poly(iminoimidazolidinediones) and poly(parabanic acid) resins. Both the poly(iminoimidazolidinediones) and poly(parabanic acids) and their methods of preparation are known and described in detail in U.S. Pat. No. 3,661,859. The poly(parabanic acids) may also be prepared by other processes, such as shown in U.S. Pat. No. 3,609,113 and German Pat. No. 1,770,146.

The polymers may contain both imino-1,3-imidazolidinedione-1,3-diyl rings and imidazolidinetrione rings, thus the present polymers may be broadly characterized as having the repeating unit:

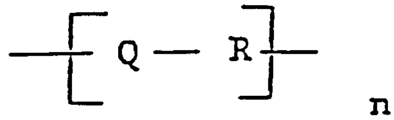

wherein Q is

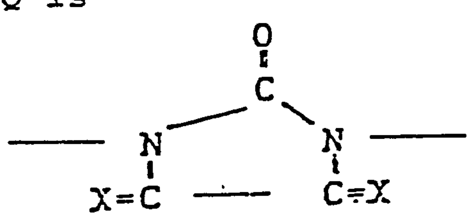

wherein X is O or NH, provided that at least one X is O, R is an organic moiety which may be aliphatic, alicyclic, aromatic

or mixtures thereof, and n is sufficiently large to produce a solid product.

Some of the parabanic acid polymers have been found to have high glass transition temperatures, and thus are especially suitable as magnetic tapes (where good dimensional stability at high temperatures is required), films for use in flexible printed circuits, cable wraps, etc., for fibers such as tire cord fibers (where tensile strength and modulus are required), for moldings for electrical connectors, bearings, magnetic wire insulation, coatings for cables, cookware, glass fabrics, industrial belts (where high temperatures are required) and the like.

In addition to the excellent thermal and physical properties of the films made from the polymers they have the advantage of providing thermal and radiant insulation. These and other advantages and features of the present invention will become obvious from the following description.

The present invention relates to a method of thermally insulating an area by positioning a structure comprising a film of non-porous, micro-cellular polymer as described below alone or with a contiguous second material adjacent to said area. The films are opaque.

As the term "thermally insulating an area" is used herein, it is understood to mean that the structure of the defined polymer alone or with a contiguous second structure presents a thermal barrier at least 10% greater than the absence of said defined polymer or second material alone. A thermal barrier as that term is used herein means an impediment to the transfer or transmission of heat.

The structure of the defined polymer and optional second material may entirely enclose an area or may separate a first area from a second area such that the two areas communicate around the structure, in which event it may be considered that either area is insulated.

The non-porous, micro-cellular film comprises heterocyclic polymers characterized in the repeating unit by the trisubstituted 1,3-imidazolidine-1,3-diyl ring:

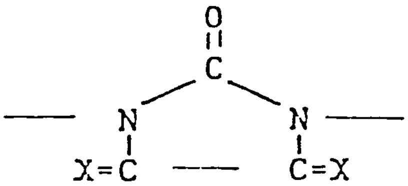

wherein X = O or NH, provided at least one X is O, or more especially polymers having the repeating unit:

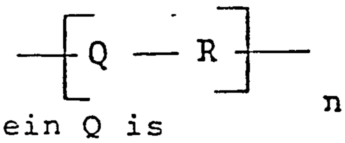

wherein Q is

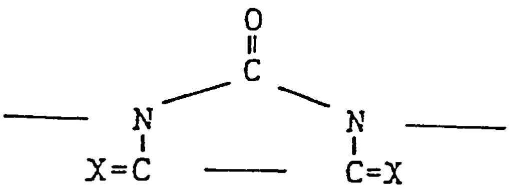

,

and X has the significance set out above, R is an organic moiety which may be aliphatic, alicyclic, aromatic or mixtures thereof and n is sufficiently large to produce a solid product.

More particularly, the polymers may be poly(imino-1,3-imidazolidinediones) of the following structure:

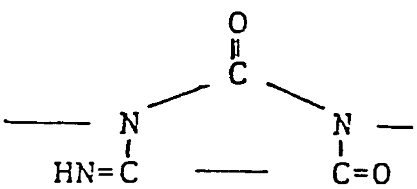

or

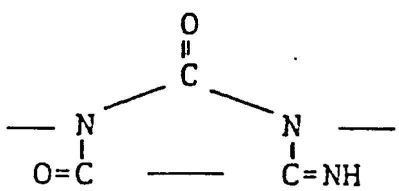

poly(parabanic acids) characterized by tri-substituted 1,3-imidazolidine-1,3-diyl rings of the following structure:

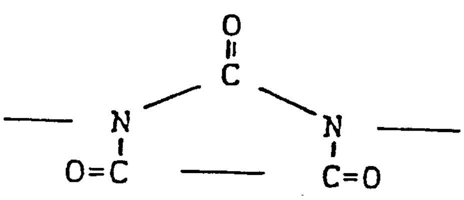

or more specifically, polymers of the general structure:

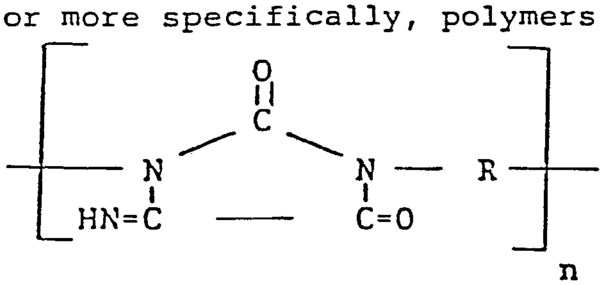

or

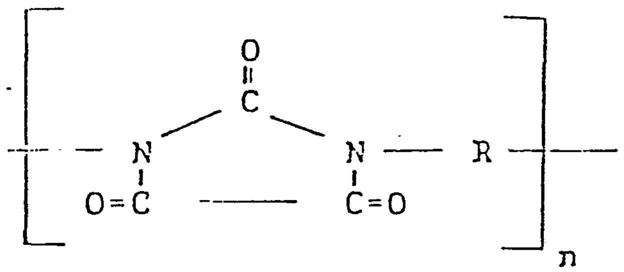 respectively,

wherein R and n have the significance given above.

The group R may be an aliphatic hydrocarbon moiety such as a tetramethylene, hexamethylene, decamethylene or 2,2,4-trimethyl-hexamethylene group, an aromatic hydrocarbon moiety such as a m-phenylene, p-phenylene, biphenylene or 1,5-naphthalene group or an alicyclic hydrocarbon moiety such as a cyclohexane group. Other examples of the group R include toluene, durene, 4,4'-diphenylmethane 3,3'-dimethyl-4,4'-biphenylene, 4,4'-diphenylisopropylidene, p-xylylene, m-xylylene, 4,4'-methylene-bis-cyclohexyl, 4-cyclohexyl-phenyl or benzyl groups. The group R may be substituted and examples of substituted moieties include the 4,4'-diphenylsulphone, 4,4'-diphenylether, 3,3'-dimethoxy-4,4'-biphenylene, dipropylether, isophorone, tetrafluoro-p-phenylene and 4,4'-octafluoro-biphenyl groups. Preferred groups R include the methylenediphenyl and oxydiphenyl groups. R may also represent a mixture of groups, and preferably a mixture of methylenediphenyl and 2,4-tolylenediyl groups or a mixture of diphenyl and bitolylenediyl groups.

The structure may comprise the defined polymer film and any other material or substrate, such as glass, wood, metal, such as steel, copper or aluminum, paper, asbestos, other polymeric materials including plastics material such as polyurethane, polyvinyl chloride, polystyrene or the defined polymer, and the like which are used contiguous to said defined polymer and may consist of multiple layers of said other materials and said defined polymer. Laminates of the defined polymer to said other material are particularly preferred, although bonding the defined polymer to the other material is not essential to obtain the benefits of thermal and radiant heat insulation of the defined polymer films.

Generally the non-porous micro-cellular films range in thickness from about 0.5 mil to 20 mils (0.0127-0.508 mm).

The micro-cellular films of the defined polymers may be produced by the method disclosed in U.S. Pat. No.'s 4,105,616 and 4,272,467. Briefly, the micro-cellular film is prepared by dissolving solid polymer of the defined polymer in moderate hydrogen bonding dipolar, aprotic solvents, for example, dimethylformamide, and casting a film with the solution in the usual manner; however, prior to complete drying of the cast film, it is precipitated by contacting the film with an antisolvent, such as water, aliphatic ketones, esters, hydrocarbons, halogenated hydrocarbons and ethers then removing the solvent and antisolvent by completely drying the now non-porous, micro-cellular film. By this process the non-porous micro-cellular films can be prepared as a free film or a permanent coating on a surface. Generally the range of cell diameters is from about 0.1 to about 10 microns.

The cellular films may be conveniently adhered to
It has a glass transition temperature of 290°C and can not be extruded or molded.

For purposes of convenience, this polymer species will be referred to as PPA-M. It will be recognized that other poly(parabanic acids) (PPA) and their precursors (PIPA) can be prepared from other monomers so that the diphenyl methane group will be replaced by other organic moieties.

In general, the preferred polymers of the polymer compositions are those which have sufficient repeating units at room temperature to be solids.

In addition to the polymer, it is contemplated that other appropriate additives which are not detrimental to the compositions, such as those employed to stabilize against oxidation or ultraviolet light, flame retardants, pigments, fillers, plasticizers and the like may be present.

The following examples illustrate the present invention:

The micro-cellular polymer films were evaluated for their effectiveness as insulation to radiant energy and thermal conductivity.

BAD ORIGINAL

the second material, e.g., wall board by conventional adhesives, such as the epoxies, polystyrene solutions, atactic polypropylene in solvents, mastics and the like.

## EXAMPLES

For purposes of illustration, the examples illustrating the invention will be described in specific with respect to cellular films of a particular polymer, that is, a poly(parabanic acid) prepared from diphenylmethane diisocyanate to result in a high performance polymer having the repeating unit shown below:

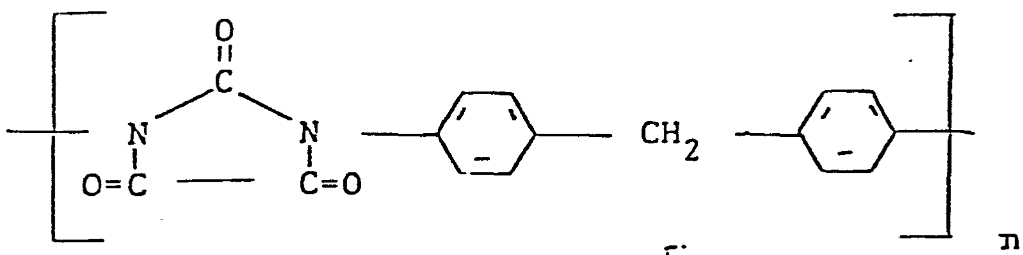

which is also designated as poly[1,4-phenylenemethylene-1,4-phenylene-1,3-(imidazolidine-2,4,4-trione)] which is also designated in chemical abstracts as poly [(2,4,5-trioxo-1,3-imidazolidinediyl)-1,4-phenylenemethylene-1,4-phenylene].

EVALUATION AS A RADIANT HEAT BARRIER

Four boxes were constructed from 1"(25.4 mm) thick polyurethane foam which had a thermal conductivity of 0.14 (BTU) (in.)/(hr.)$(ft^2)$(°F)(0.02 $Wm^{-1}{}^{\circ}C^{-1}$) and a density of 0.032 g./cc. The inside dimensions were 6" (152.4 mm) wide, 12" (304.8 mm) long, and 6"(152.4 mm) high. All edges of the boxes were sealed with aluminum duct tape. A 250°F (121°C) thermometer was inserted through the side of each box and positioned so that the mercury bulb was in the center of the box.

The tops for the boxes were sealed on with duct tape. The tops were made of micro-cellular PPA-M film, and 1" (25.4 mm) thick rigid polyurethane foam as described.

The boxes were mounted on a board adjacent to each other and placed in direct sunlight on the roof of a building. The temperature inside each box was recorded at various times throughout the day as recored in Tables I and II.

Table I shows a comparison of the effectiveness of glass, polyurethane foam and cellular PPA-M film to resist the transfer of heat during direct exposure to the sun.

The data in Table I reveals that the cellular PPA-M film is an excellent barrier to radiant heat. It is better than polyurethane foam and is superior to glass.

TABLE I

Temperature Inside Boxes

| Box Cover: | Glass | | Poly U Foam [(a)] | | Cellular PPA-M [(b)] | |
|---|---|---|---|---|---|---|
| Time of Day | °F | (°C) | °F | (°C) | °F | (°C) |
| 9:10 a.m. | 85 | 29 | 85 | 29 | 85 | 29 |
| 10:30 a.m. | 164 | 73 | 122 | 50 | 116 | 47 |
| 1:10 p.m. | 182 | 83 | 122 | 50 | 115 | 46 |
| 4:00 p.m. | 158 | 70 | 120 | 49 | 106 | 41 |
| 4:30 p.m. | 149 | 65 | 117 | 47 | 105 | 41 |

(a) Rigid polyurethane foam, 1" (25.4 mm) thick.

(b) Cellular PPA-M film, 0.010" (0.25 mm) thick.

The data in Table II shows that cellular films of two thicknesses and two different densities compare favorably with 1" (25.4 mm) thick polyurethane foam as barriers to radiant

heat.

TABLE II

B. RADIANT HEAT EVALUATIONS

| | Temperature Inside Boxes | | | | | | | |
|---|---|---|---|---|---|---|---|---|
| Example | 1 | | 2 (b) | | 3 (c) | | 4 (d) | |
| Box Cover: | Poly U Foam (a) | | Cellular PPA-M Film | | | | | |
| Time of Day | | | | | | | | |
| 8:00 a.m. | $82^oF(28^oC)$ | | $82^oF(28^oC)$ | | $82^oF(28^oC)$ | | $82^oF(28^oC)$ | |
| 9:00 a.m. | 102 | 39 | 100 | 38 | 98 | 37 | 92 | 33 |
| 1:05 p.m. | 111 | 44 | 116 | 47 | 112 | 44 | 107 | 42 |
| 3:00 p.m. | 109 | 43 | 112 | 44 | 110 | 43 | 104 | 40 |

(a) Rigid polyurethane foam, 1" (25.4 mm) thick.
(b) Cellular PPA-M film, 0.002" (0.051 mm) thick, density = 0.69.
(c) Cellular PPA-M film, 0.005" (0.127 mm) thick, density = 0.60.
(d) Cellular PPA-M film, 0.005" (0.127 mm) thick, density = 0.080.

EVALUATION OF THERMAL CONDUCTIVITY

The thermal conductivities of three PPA-M microcellular films were determined by placing the film (17 mm diameter) between polished silver plates which could be kept at the given boiling points of two liquids by a constant supply of heat to the higher boiling point liquid. When steady equilibrium was attained, the lower boiling point liquid vaporized at a constant rate and was condensed and collected in a measuring vessel. The time for a given volume to distill was measured and the thermal conductivity was calculated. The Colora Thermo-conductometer was used to make the measurements.

The results of this evaluation are reported in Table III.

## TABLE III

THERMAL CONDUCTIVITY EVALUATIONS

| Example | Thickness | Density | Thermal Conductivity $Wm^{-1}deg.C.^{-1}$ (b) | Thermal Conductivity (BTU) (in)/(hr) ($ft^2$) (°F) (c) |
|---|---|---|---|---|
| 5 | 0.005 in. (0.127 mm) | 0.81 g./cc. | 0.13 | 0.90 |
| 6 | 0.0055 in. (0.14 mm) | 0.59 g./cc. | 0.12 | 0.83 |
| 7 | 0.002 in. (0.051 mm) | 0.83 g./cc. | 0.10 | 0.69 |

(a) The films were micro-cellular, non-porous and opaque.

(b) Thermal conductivity expressed in S.I. (Systems International d'Unites) units; W = watts, m = meter.

(c) Thermal conductivity expressed in British units.

CLAIMS

1. A method of thermally insulating an area comprising positioning adjacent to the area a thermal barrier comprising a polymeric non-porous micro-cellular film characterized in that the thermal barrier comprises a film of heterocyclic polymers having in the repeating units the tri-substituted 1,3-imidazolidine-1,3-diyl ring:

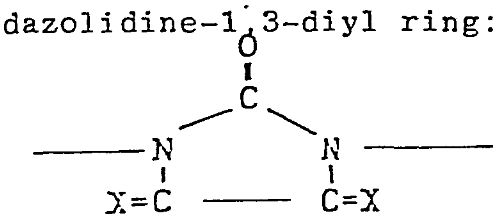

(wherein X = O or NH, provided at least one X is O) either alone or contiguous to a second material adjacent to said area.

2. A method according to claim 1, in which the polymer of which the film is formed have the repeating unit:

$$-\!\![\,Q - R\,]_n\!\!-$$

wherein Q is

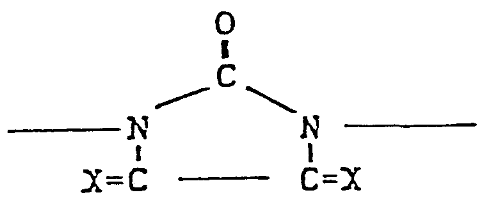

X = O or NH, provided at least one X is O, R is an organic moiety which may be aliphatic, alicyclic, aromatic or mixtures thereof and n is sufficiently large to produce a solid product.

3. A method according to claim 2, in which the polymer has the structure:

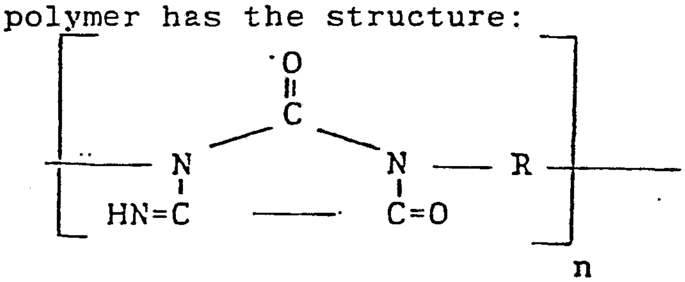

4. A method according to claim 2, in which the polymer has the structure:

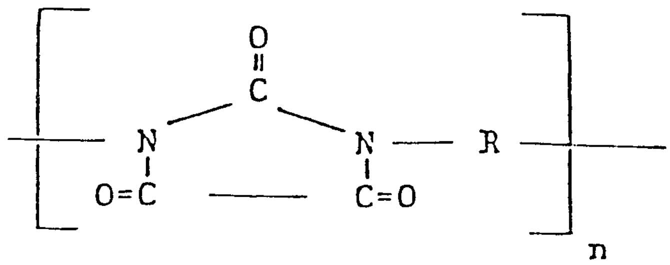

5. A method according to claim 3 or 4, in which R is methylenediphenyl.

6. A method according to claim 3 or 4, in which R is oxydiphenyl.

7. A method according to claim 3 or 4, in which R is a mixture of methylenediphenyl and 2,4-tolylenediyl groups.

8. A method according to claim 3 or 4, in which R is a mixture of diphenyl and bitolylenediyl groups.

9. A method according to any of claims 1 to 8, in which the film is bonded to the second material thereby forming a laminate.

10. A method according to any of claims 1 to 9, in which the second material is glass, wood, metal, paper, asbestos or a plastics material.

11. A method according to any of claims 1 to 10, in which the thermal barrier comprises the non-porous micro-cellular film alone.

12. A method according to any of claims 1 to 11, in which the film is from 0.0127 to 0.508 mm.